# EUROPÄISCHE PATENTANMELDUNG

(11) **EP 0 768 346 A2**
(43) Veröffentlichungstag der Anmeldung: **16.04.1997**
(21) Anmeldenummer: 96113589.4
(22) Anmeldetag: 24.08.1996
(51) Int. Cl.: C09C 3/00, C08K 9/00, C08J 11/04, C08J 3/20

(54) **Eingefärbte Dekor-Partikel in glasfaserverstärkten Duroplasten**

(30) Priorität: 06.09.1995 DE 19532872
(71) Anmelder: Menzolit-Fibron GmbH, 75015 Bretten (DE)
(72) Erfinder: Bieniek, Klaus, 76703 Kraichtal (DE); Ehnert, Gerd, 76694 Forst (DE)
(74) Vertreter: Scherzberg, Andreas, Dr.

(57) **Zusammenfassung**

Um besondere dekorative Effekte in glasfaserverstärkten Duroplasten zu erhalten, werden gefärbte Dekor-Partikel zugegeben. Die Erfindung beschreibt ein Verfahren zur Herstellung dieser Dekor-Partikel, deren Verwendung zur Herstellung von glasfaserverstärkten Duroplasten und ein glasfaserverstärktes Duroplast mit den beschriebenen gefärbten Dekor-Partikeln.

## Beschreibung

Die Erfindung betrifft ein Verfahren zur Herstellung von Dekor-Partikeln für den Einsatz in glasfaserverstärkten Duroplasten, die Verwendung dieser Dekor-Partikel zur Herstellung von glasfaserverstäkten Duroplasten und ein glasfaserverstärktes Duroplast.

Der Werkstoff SMC (Sheet Moulding Compound) und BMC (Bulk Moulding Compound), auch als "glasfaserverstärkte ungesattigte Polyesterpreßmassen" bezeichnet, hat seit mehreren Jahrzehnten ein breit gefächertes Einsatzspektrum in der Automobil-, Elektro-, Sanitär- und Freizeitindustrie. Für Bauteile des Sanitär- und Freizeitmarktes sind neben Kratz- und Abriebfestigkeit, Hitze- und Witterungsbeständigkeit vor allem dekorative Aspekte als Qualitätskriterium gefordert. Bis dato kann diese Werkstoffgruppe aber nur zu unifarbenen Bauteilen verarbeitet werden.

Durch Oberflächenbeschichtungsverfahren, wie das IMC (Inmould-Coating) mit Pulver- oder Flüssiglack oder das Lackieren, können zwar bestimmte Eigenschaften, wie Abriebfestigkeit, Witterungsbeständigkeit, Glanzgrad etc. verbessert werden; jedoch bleibt das Formteil auf seine Einfarbigkeit beschränkte

Um Oberflächendekors zu erhalten, werden für einige Anwendungen Dekorfolien aufgearbeitet. Diese Verfahren sind auf waagerechte Flächen beschränkt, d.h. für komplizierte Bauteilgeometrien nicht anwendbar.

Stand der Technik ist es, den zur SMC/BMC-Herstellung verwendeten UP-Harzen feste Zuschlagstoffe (Füllstoffe) zuzusetzen. Durch Qualität und Quantität dieser Zuschlagstoffe wird das Eigenschaftsprofil der Werkstoffe bzw. der resultierenden Formteile entscheidend beeinflußt.

Übliche Zuschlagstoffe sind u.a.
- Kreide (Calciumcarbonat CaCO₃)
- Aluminiumtrihydrat, Al(OH)₃ bzw. Al₂O₃·3H₂O
- Kaolin, Al₂O₃·SiO₂·2H₂O
- Bariumsulfat, BaSO₄
- Feldspat
- Glimmer, K₂Al₄(Al₂Si₆O₂)(OH)₄
- SMC/BMC-Recyclat: gemahlene, gehärtete ungesättige Polyesterharzbauteile
- Hohlglaskugeln
- Vollglaskugeln

Zur Verstärkung der SMC/BMC-Werkstoffe werden Glasfasern von 3-25 mm Faserlänge verwendet.

Die Eigenfarbe des SMC/BMC-Werkstoffes bewegt sich je nach Zuschlagstoff zwischen weiß, beige und graubraun.

Stand der Technik ist es weiterhin, die Eigenfarbe der Zuschlagstoffe durch Einfärbung der Polyestermasse zu überdecken. In allen Fällen werden unifarbene SMC/BMC-Bauteile erzeugt.

Der Erfindung liegt die Aufgabe zugrunde, glasfaserverstärkte Duroplaste zu schaffen, deren Oberflächen besondere dekorative Effekte aufweisen.

Um dekorative Effekte im SMC/BMC-Werkstoff zu erzeugen, sollen Partikel zugesetzt werden, die durch Farbe und Geometrie die Formteiloberfläche gestalten.

Ein erfindungsgemäßes Verfahren zur Herstellung von Dekor-Partikeln für den Einsatz in glasfaserverstärkten Duroplasten zeichnet sich durch folgende Verfahrensschritte aus:
- Vorbereitung des Färbungsmittels,
- Gravimetrische Dosierung der Dekor-Partikel in einen Mischer,
- Zugabe des aufbereiteten Färbungsmittels zu den Dekor-Partikeln im Mischer,
- Mischung bis zur homogenen Verteilung des Farbstoffes auf den Dekor-Partikeln,
- Verteilen der gefärbten Dekor-Partikel auf Trockenböden,
- Trocknung und Härtung der gefärbten Dekor-Partikel in einem Trockenofen.

Als Partikel für die Einfärbung zu Dekor-Partikeln kommen folgende Rohstoffe in Frage:
a) Alle anorganischen (mineralischen) Gesteine mit Korngeometrie und einer Korngröße > 100 µm, < 3 000 µm. Die Korngrößenverteilung jeder Gesteinstype ist in Fraktionen unterteilt, so daß von jeder Type nochmals feinere oder gröbere Varianten getrennt oder als Abmischung eingesetzt werden können, wie z.B.
   Kreide, CaCO₃
   Kaolin, Al₂O₃·SiO₂·2H₂O
   ATH, Al₂O₃·3H₂O
b) Alle anorganischen (mineralischen) Gesteine mit Plättchenstruktur und einer Plättchenlänge > 500 µm < 20 000 µm, wie z.B.
   Glimmer.

   Die chemische Zusammensetzung kann je nach Glimmertypen, d.h. Abbaugebiet, variieren.
c) SMC/BMC-Recyclat, d.h. gemahlene Bauteile aus gehärteten ungesättigten Polyesterformmassen. Dieses Recyclat wird vom Hersteller in verschiedenen Fraktionen, d.h. verschiedenen Korngrößen angeboten. Vorzugsweise werden Körnungen > 600 µm eingesetzt. Die chemische Zusammensetzung des Recyclats ergibt sich aus dem Input der gemahlenen Bauteile.
d) Alle organischen Partikel (auch Naturprodukte) mit entsprechender Geometrie, wie z.B.
   Kirschkerne
   Nußschalen
   Holzspäne etc.

In allen Fällen werden Rohstoffe verwendet, welche in ihrer spezifischen Härte nach Mohs kleiner gleich 5 sind, um abrasive Folgeerscheinungen bei der Herstellung, Verarbeitung und Nacharbeit zu reduzieren.

Als Färbungsmittel eignen sich Lacke, welche Filme bzw. Beschichtungen bilden welche sich durch SMC/BMC-gebräuchliche Monomere (wie z.B. Styrol oder Vinyltoluol, Acrylate, organische Peroxide etc.) nicht mehr lösen oder quellen lassen. Hierfür eignen sich prinzipiell alle räumlich vernetzten Lacke, wie z.B.
- 2K-PUR-Lack auf Acrylatbasis, Vernetzung über Isocyanate. Bindemittel sind hydroxifunktionelle Acrylharze, welche über die Hydroxidgruppen mit oligomeren Isocyanaten auf Basis von TDI (Toluylendiisocyanat), MDI (Diphenylmethan 4,4-Diisocyanat), HDI (Hexamethylendiisocyanat) etc. zu räumlich vernetzten Polyurethanen reagieren.
- 2K-PUR-Lack auf Polyesterbasis, Vernetzung über Isocyanate. Bindemittel sind verzweigte gesättigte Polyesterpolyole, welche über die Hydroxidgruppen mit oligomeren Isocyanaten auf Basis von TDI, MDI, HDI etc. zu räumlich vernetzten Polyurethanen reagieren.
- 2K-Epoxy-Lacke
   Vernetzung von Epoxidharzen mit Aminen, Polyamidoaminen etc. (oder anderen dem Stand der Technik entsprechenden Vernetzern) zu räumlich vernetzten Epoxiden.
- 1K-Acryl-Melaminlacke, Mischung aus gesättigten Polyesterharzen oder Acrylharzen und Harnstoffharzen, Melaminformaldehydharzen oder Benzoguanaminharzen etc. Die Vernetzung läuft erst bei höheren Temperaturen > 80°C ab.

Alle Lacksysteme können entweder auf der Basis von organischen Lösemitteln, wie z.B. N-Butylacetat, Xylol, 1-Methoxy-2-Propylacetat, Ethylbenzol etc. oder auf Wasserbasis eingesetzt werden.

Vorzugsweise werden aber Lacksysteme auf Wasserbasis verwendet, d.h. Polymer Bindemittel, welche in Wasser gelöst, emulgiert oder dispergiert sind.

Als Beispiel für solche Wasserlacke (hier 2K-PUR-Lack auf Polyesterbasis) können genannt werden:

| **Ifd. Nummer** | **Bezeichnung** | **Nummer** | **Lieferant** |
|---|---|---|---|
| 1. | 2K-Aquacolor-Decklack, schwarz, seidenmatt | 318/010001 | Fa. Cetelon 71254 Ditzingen |
| 2. | 2H-Wasser-Decklack, schwarz | 94-OB-0307 | Fa. Schwaab-Lacke 76353 Weingarten |
| 3. | 2K-Wasser-Decklack, blaugrün/RAL 6004 | 94-CF-0205 | Fa. Schwaab-Lacke 76353 Weingarten |
| 4. | 2K-Wasser-Decklack, karminrot, RAL 3002 | 94-CF-0201 | Fa. Schwaab-Lacke 76353 Weingarten |
| 5. | 2K-Wasser-Decklack, wasserblau, RAL 5021 | 94-CF-0203 | Fa. Schwaab-Lacke 76353 Weingarten |
| 6. | 2K-Wasser-Decklack, nachtblau, RAL 5022 | 94-CF-0202 | Fa. Schwaab-Lacke 76353 Weingarten |
| 7. | 2K-Wasser-Decklack, moosgrün, RAL 6005 | 94-CF-0200 | Fa. Schwaab-Lacke 76353 Weingarten |

Die o.g. Beispiele sind auf das gesamte RAL-Farbspektrum erweiterbar.

Lack Nr. 1 wird gehärtet mit einem Isocyanathärter Nr. 065/010101 im Verhältnis 10:3.

Lacke Nr. 2 bis 7 werden gehärtet mit einem Isocyanathärter Nr. 98-70-0000 im Verhältnis 4:1. Beim Härter handelt es sich um ein oligomeres TDI (Toluylendiisocyanat).

Der Vorteil von Lacken auf Wasserbasis für die Einfärbung von Dekor-Partikeln ist:
a) Die Anlageninvestition zur Abdampfung von ökologisch unbedenklichem Wasser ist geringer als für organische Lösungsmittel, da die Entsorgung der abdampfenden Lösungsmittel gewährleistet sein muß.
b) Restwasser Lösungsmittelrest wird vom Härter chemisch umgesetzt und in den Lackfilm mit eingebaut.
c) Bei der Einfärbung von Recyclat konnte die Lackmenge beim Austausch von Lack mit organischen Lösungsmittel auf Lack mit Wasser als Lösungsmittel um ca. 50% reduziert werden. Der Grund hierfür ist mit durch die hohe Lösungsmittelaufnahme des Recyclats begründet, d.h. der Lack "säuft" zum Substrat hin ab. Durch die höhere Viskosität und geringere Affinität des Wasserlackes zum Recyclat bleibt der Lack in größerem Umfange an der Oberfläche der Partikel.

Weitere Färbungsmittel sind sublimierbare Farbstoffe, welche sich unzersetzt sublimieren lassen. Der Farbauftrag erfolgt aus wässriger Dispersion. Durch Trocknung und anschließende Wärmebehandlung bei 160-220°C sublimieren die Farbstoffe in das Substrat.

Rezepturbeispiele sind:
a) Rezeptur 1: SMC/BMC-Recyclat gefärbt mit 2K-PUR-Wasserlack

| **Rohstofftyp** | **Bezeichnung** | **Menge** |
|---|---|---|
| SMC/BMC-Recyclat | RC 3100 | 10 kg |
| | | |
| 2K-PUR-Wasserlack | 94-OB-0307 | 0,729 kg |
| 2K-PUR-Wasserhärter | 98-70-0000 | 0,364 kg |

b) Rezeptur 2: Mineralische Partikel auf Glimmerbasis gefärbt mit 2K-PUR-Wasserlack

| **Rohstofftyp** | **Bezeichnung** | **Menge** |
|---|---|---|
| Gesteinspartikel | Plastorit 1 | 10 kg |
| 2K-PUR-Wasserlack | 94-CF-0205 | 0,272 kg |
| 2K-PUR-Wasserhärter | 98-70-0000 | 0,078 kg |

Die Ausnutzung interessanter Partikelgeometrien, insbesondere die groben Plättchen und Faserstrukturen von SMC/BMC-Recyclat und deren Einfärbung in nahezu alle RAL-Farbtöne ergibt ein weites Spektrum an Gestaltungsmöglichkeiten. Hieraus resultiert eine völlig neue SMC/BMC-Werkstoffgruppe, insbesondere für Bauteile des Sanitär- und Freizeitmarktes, welche sich durch völlig neue Oberflächendekors auszeichnet: "Dekor-Compound".

Der Verfahrensablauf zur Herstellung der gefärbten Dekor-Partikel unterteilt sich in folgende Verfahrensschritte:
- Verfahrensschritt 1:: Die Dekor-Partikel im Rohzustand werden gravimetrisch in einen Mischer dosiert. Geeignet sind z. B. Doppel-Z-Kneter, Turbulenzmischer in waagerechter oder schräger Lage, und im einfachsten Fall das Prinzip eines Betonmischers.
- Verfahrensschritt 2:: Vorbereitung des Färbungsmittels. Im Falle eines 2K-PUR-Wasserlackes werden die Einzelkomponenten, d.h. pigmentiertes Polymer und Isocyanat, mit einem Dissolver homogenisiert.
- Verfahrensschritt 3:: Der aufbereitete Lack wird unter laufendem Mischer zu den Partikeln in den Mischer dosiert.
- Verfahrensschritt 4:: Partikelbeschichtung
Nach der Lackzugabe bei laufendem Mischer wird bis zur homogenen Verteilung des Farbstoffes auf den Partikeln gemischt.

Mischparameter am Rezepturbeispiel 1 unter Verwendung eines Doppel-Z-Kneters:
- 1. Lackdosierung:: 1 Min 30 s
Mischrichtung vorwärts, Schnellgang
- 2. Homogenisierung:: 3 Min 30 s
Mischrichtung vorwärts, Schnellgang
- 3. Homogenisierung:: 30 s
Mischrichtung rückwärts, Langsamgang
- 4. Homogenisierung:: 3 Min
Mischrichtung vorwärts, Schnellgang
- Gesamtmischzeit:: 8 Min 30 s

- Verfahrensschritt 5:: Die gefärbten Partikel werden in Trockenböden gefüllt und in einem Umluftofen gestapelt.
- Verfahrensschritt 6:: Trocknung und Härtung der gefärbten Partikel Abhängig vom Typ und Quantität des Lackes variieren Temperatur und Aufenthaltszeit im Trockenofen. Alternativ zum Umluftofen sind Trocknungsprozesse in Infrarot-Tunnels möglich. Hierbei sollte die Füllhöhe der Partikel gering gehalten werden.
z.B.
Temperatur: 130°C
Verweilzeit: 2 Std.

Erfindungsgemäß beträgt die Trockenzeit je nach Lacksystem zwischen 1 Minute und 6 Stunden bei Temperaturen von Raumtemperatur bis 200°C.

Nach dem Trocknungs- und Härtungsprozeß sind die Dekor-Partikel für den Einsatz im Dekor-Compound einsatzfähig.

Durch den Einsatz der beschriebenen "Dekor-Partikel" im SMC/BMC-Werkstoff ergibt sich ein weites Feld der Gestaltungsmöglichkeiten neuer Dekors. Die Kombination verschiedener Partikelgeometrien mit dem gesamten Farb-RAL-Spektrum, zusätzlich erweitert durch frei wählbare Hintergrundfarben bzw. Compound-Einfärbungen, ergibt nahezu unendliche Dekorvarianten.

Neben den oben beschriebenen farblichen Aspekten wird durch den Einsatz bestimmter Dekor-Partikel, wie z.B. SMC/BMC-Recyclat eine räumlich strukturierte Bauteiloberfläche erzielt. Hierbei wird jeder farbige Partikel zusätzlich als geringe Vertiefung in der Oberfläche sichtbar. Dieses Eigenschaftsmerkmal kann durch die Gestaltung der Compound-Rezeptur beeinflußt, d.h. verstärkt oder reduziert werden. Die räumlichen Strukturunterschiede bewirken neben einem neuen ansprechenden Oberflächendekor zusätzlich die Reduzierung der Sichtbarkeit von Oberflächenfehlern, wie z.B. Kratzer, die im Laufe der Anwendung entstehen.

Erfindungsgemäß weist das glasfaserverstärkte Duroplast (hier auch Dekor-Compound genannt) folgende Bestandteile auf:
- Eingefärbte Dekor-Partikel,
- Polymerharz,
- Thermoplastharz,
- Vernetzungsinitiatoren,
- Inhibitoren
- Interne Trennmittel,
- Ungesättigte Monomere,
- Anorganische und organische Farbpigmente,
- Füllstoffe,
- Eindickmittel und
- Glasfasern.

Im folgenden werden die einzelnen Bestandteile des Dekor-Compounds eingehend beschrieben.
1.) Ein Polymerharz, welches nach dem radikalischen Reaktionsmechanismus zu einem vernetzten duroplastischen Bauteil polymerisiert werden kann.
   Der Anteil an ungesättigtem Polymerharz, bezogen auf die Gesamtrezeptur, variiert zwischen 8 - 33 Gew.-%.
   Polymerharze sind hierbei ungesättigte Polymere, wie z.B. ungesättigte Polyester, Vinylester oder ungesättigte Acrylattypen, gelöst in einem flüssigen ungesättigten Monomer oder Monomerengemisch, welche mit den Polymeren copolymerisierbar sind.
   Beispiele solcher Monomeren sind:
   a) Vinylverbindungen, wie Styrol und Styrolderivate, wie Vinyltuluol, p-Divinylbenzol etc.
   b) Acrylverbindungen, wie z. B. Methylmetharcrylat, Methylacrylat, mehrfach ungesättigte Acrylate, hydroxyfunktionelle Acrylate etc.
   c) Vinylester, wie z.B. Vinylacetat
   d) Allylverbindungen, wie Allylester, z.B. Diallylphtalat

   Ungesättigte Polyester sind Polykondensationsprodukte aus meist α, β-ungesättigten Dicarbonsäuren, ungesättigten Dicarbonsäureanhydriden, aromatischen Dicarbonsäuren oder gesättigten Dicarbonsäuren mit Diolen oder Diolgemischen.
   a) Beispiel für α, β-ungesättigte Dicarbonsäuren sind Maleinsäure, Maleinsäureanhydrid, Furmarsäure, Citraconsäure oder Itaconsäure.
   b) Für die Gruppe der aromatischen Dicarbonsäuren können unter anderem vor allem o-Phthalsäureanhydrid, Isophthal- oder Terephtalsäure genannt werden.
   c) Die gesättigten Dicarbonsäuren oder Dicarbonsäurehydride finden ihren Einsatz bei hochvernetzenden Polyestern, um die Sprödigkeit zu reduzieren. Als Beispiel können unter anderem das Bernsteinsäureanhydrid, die Adipinsäure und die Sebazinsäure aufgeführt werden.
   d) Beispiele für Diole sind unter anderem Ethylenglykol, Propylenglykol, Butandiol sowie Äthergruppen enthaltende Diole.

   Vinylesterharze sind Kondensations- und Additionsprodukte aus Epoxidverbindungen (Epichlorhydrin mit Bisphenol A oder Novolakverbindungen) oder Dicarbonsäuren mit Methacrylsäure oder Acrylsäure.
   Das Verhältnis von ungesättigtem Polymer zu ungesättigtem Monomer bewegt sich zwischen 70 : 30 und 40 : 60 Gew.-%.
2.) Ein Thermoplastharz, welches über einen bestimmten Reaktionsmechanismus bei der Härtung des ungesättigten Polymeren eine Schwindungskompensation bewirkt. Der Anteil an Thermoplastharz auf die Gesamtrezeptur variiert zwischen 0 - 18 Gew.-%.
   Neben festen Thermoplasten, wie z.B. Polyethylen oder Polyethylencopolymere werden vor allem Lösungen von z.B. Polystyrol, Polystyrolkautschuke, Polyvinylacetat, thermoplastischer Polyester, Polymethylmethacrylat in ungesättigten Monomeren verwendet. Neben hauptsächlich Styrol könnend die weiter oben beschriebenen Monomeren Verwendung finden. Das Verhältnis von Thermoplast zu Monomer liegt zwischen 20 : 80 und 60 : 40 Gew.-%.
   Das Verhältnis zwischen ungesättigtem Harz und Thermoplastharz liegt zwischen 95 : 5 und 45 : 55 Gew.-%.
3.) Vernetzungsinitiatoren, welche die radikalische Polymerisation einleiten und beschleunigen.
   Der Anteil Vernetzungsinitiator auf die Gesamtrezeptur (Gesamt-Compound) variiert von 0,2 - 0,66 Gew.-%.
   Vernetzungsinitiatoren sind Verbindungen, welche unter Verarbeitungsbedingungen, d.h. bei höheren Temperaturen in reaktionsfähige Radikale zerfallen, wie z. B. organische Peroxide.
   Die Verarbeitung von SMC und BMC erfolgt nach dem Heißpreßverfahren. Demzufolge kommen nur solche Peroxide in Betracht, welche erst ab bestimmten Temperaturen Radikale bilden.
   Je nach Reaktivitätseinstellung können für Dekor-Compound die verschiedensten Peroxide verwendet werden. Die wichtigsten Vertreter sind Perester tertiärer Hydroperoxide, wie das tert.-Butylperbenzoat und tert.-Butylperoctoat und Perketale, wie das 1,1-Bis-(tert.-butyl-peroxy)cyclohexan. Gemische von Peroxiden mit unterschiedlichen Zerfalltemperaturen sind gebräuchlich.
4.) Inhibitoren, welche durch Reaktion mit reaktiven Radikalen inaktive Moleküle oder sehr träge Radikale bilden, welche dann nicht mehr in der Lage sind, mit ungesättigten Verbindungen neue Radikalketten zu starten.
   Der Anteil an Inhibitoren, bezogen auf die Gesamtrezeptur (Gesamt-Compound) variiert zwischen 0 - 0,33 Gew.-%.
   Durch die Verwendung von Inhibitoren können bestimmte Lagerzeiten gewährleistet, sowie Reaktivitäten, d.h. Fließ- und Härtezeiten des Compounds im Werkzeug eingestellt werden. Für Dekor-Compound wird vorwiegend p-Benzochinon und Di-tert.-Butyl-p-Kresol als Inhibitor verwendet.
5.) Interne Trennmittel als Entformungshilfen bei der Verarbeitung (Heißpressen in z.B. Stahlwerkzeugen) von Dekor-Compound. Die nachfolgend aufgeführten Trennmittel werden in Konzentrationen zwischen 0,6 - 3,3 Gew.-%, bezogen auf die Gesamtrezeptur (Gesamt-Compound) eingesetzt.
   Als interne Trennmittel werden u.a. vorzugsweise Stearinsäure oder Salze der Stearinsäure, wie z.B. Calcium- oder Zinkstearat verwendet.
6.) Ungesättigte Monomere, wie oben beschrieben, können zusätzlich zugegeben werden, um z.B. die Viskosität der Harz-Füllstoff-Mischung auf ein bestimmtes niederes Niveau einzustellen, um eine gute Benetzung der Verstärkungsfasern zu gewährleisten.
   Die ungesättigten Monomere werden in Anteilen von 0 - 4,75 Gew.-%, bezogen auf die Gesamtrezeptur (Gesamt-Compound), eingesetzt.
7.) Anorganische und organische Farbpigmente als reines Farbpulver oder als Farbpaste, d.h. konzentrierte Pigmentpasten in mit Polyester gut verträglichen Verbindungen zur Hintergrundfärbung des Dekor-Compounds.
   Die Farbpasten werden in Anteilen von 0-6,6 Gew.-%, bezogen auf die Gesamtrezeptur (Gesamt-Compound) eingesetzt.
   Im Falle der reinen Pigmente sind die Konzentrationen entsprechend niedriger.
   Für Weißpigmente sind vor allem Lithopone, eine Mischung aus Zinksulfid und Bariumsulfat und das Titandioxid in seinen Rutil- und Anatasmodifikationen zu nennen.
   Beispiele für "Schwarz" sind Ruß oder Eisenoxid. Eisenoxid liefert ebenfalls Rot- und Gelbtöne.
   Für "Grün" wird vorzugsweise Chromoxidgrün und Chromoxidhydratgrün verwendet. Blautöne werden durch Ultramarin, Kobaltaluminat oder Eisencyanidkomplexsalze erreicht.
8.) Füllstoffe bzw. Füllstoffgemische in Form von Gesteinsmehlen oder synthetisch hergestellten anorganischen pulverförmigen Produkten
   Füllstoffe werden in Anteilen von 20 - 65 Gew.-%, bezogen auf die Gesamtrezeptur (Gesamt-Compound) verwendet.
   Gründe für den Einsatz von Füllstoffen sind:
   a) zur Schwindungskompensation bei der Härtung des Compounds
   b) zur Herabsetzung von Temperaturspitzen bei der Härtung und als Folge zur Verminderung von Spannungen und demzufolge Rißbildungen im Fertigteil.
   c) zur Beeinflussung von physikalischen Eigenschaften des Bauteils, wie z.B. Mechanik, Brandverhalten, Oberflächenhärte, optische Oberflächenqualitäten oder Dichte.
   d) SMC oder BMC sind ohne Füllstoffzusätze aus produktionstechnischen Gründen schwierig produzierbar und die ohne Füllstoffzusätze hergestellten Compounds sind nicht gut handelbar.

   Beispiele für Füllstoffe sind:
   - Kreide Calciumcarbonat, CaCO₃
   - Aluminiumtrihydrat, Al₂O₃·3H₂O bzw. Al(OH)₃
   - Bariumsulfat, BaSO₄
   - Glimmer, K₂Al₄(Al₂Si₆O₂)(OH)₄
   - Feldspat
   - Kaolin, Al₂O₃·SiO₂·2H₂O
   - Hohlglaskugeln
   - Vollglaskugeln

   Für den Einsatz im Dekor-Compound wird bevorzugt ATH bzw. ATH-Abmischungen verwendet. Vorwiegend werden ATH-Typen mit unterschiedlichen mittleren Teilchendurchmessern abgemischt, um eine optimale Packungsdichte der Füllstoffe zu erreichen. Das Verhältnis von grobem ATH (mittlerer Teilchendurchmesser von ca. 8 µm) mit feinem ATH (mittlerer Teilchendurchmesser von ca. 1 µm) liegt zwischen 2 : 1 bis 1 : 1.
9.) Dekor-Partikel bzw. Dekor-Partikel-Gemische zur Gestaltung von Dekor- und Oberflächenaspekten der Bauteile.
   Die Dekor-Partikel werden in Anteilen von 0,1-15 Gew.-%, bezogen auf die Gesamtrezeptur (Gesamt-Compound) verwendet. Die detaillierte Beschreibung der Dekor-Partikel ist weiter oben dargestellt.
10.) Eindickmittel zur Viskositätserhöhung des Compounds nach der Herstellung, d.h. nach der Faserimprägnierung. Eindickmittel werden in Anteilen von 0-1,0 Gew.-%, bezogen auf die Gesamtrezeptur (Dekor-Compound), verwendet.
   Im Falle von SMC als Dekor-Compound ist die Verwendung von Eindickmitteln erforderlich, um ein Handling des Compounds zu gewährleisten. Dekor-BMC kann ohne Eindickmittel verarbeitet werden.
   Eindickmittel sind Erdalkalioxide oder Hydroxide, wie z.B. Calciumoxid, Calciumhydroxid, Magnesiumoxid oder Magnesiumhydroxid.
   Der Zusatz oben genannter Substanzen zu ungesättigten Polymerharzen mit Carboxylendgruppen führt zu starken Viskositätserhöhungen bis zur Klebfreiheit des Harzes. Durch diese Klebfreiheit ist die Produktion bzw. Weiterverarbeitung von SMC erst möglich.

### Rezepturbeispiel Nr. 1

| **Rohstoff** | **Anteil (Gew.-%)** |
|---|---|
| ungesättigtes Polyesterharz auf Maleinsäurebasis 65 %-ige Lösung in Styrol | 11,8 |
| Thermoplastharz, Polystyrol 35 %-ige Lösung in Styrol | 7,8 |
| organisches Peroxid, tert.-Butylperbenzoat | 0,38 |
| Inhibitor, p-Benzochinon | 0,02 |
| Trennmittel, Zinkstearat | 1,7 |
| Monomer, Styrol | 1,5 |
| Farbpaste, Lithopone | 3,1 |
| Füllstoffe, ATH fein | 20,5 |
| | |
| Füllstoffe, ATH grob | 27,4 |
| Dekor-Partikel, auf Basis von SMC/BMC-Recyclat > 600 µm | 7,8 |
| E-Glasfasern, 12 mm Faserlänge | 18,0 |

### Rezepturbeispiel Nr. 2

| **Rohstoff** | **Anteil (Gew.-%)** |
|---|---|
| ungesättigtes Polyesterharz auf Maleinsäurebasis , 65 %-ige Lösung in Styrol | 11,8 |
| Thermoplastharz, Polystyrol 35 %-ige Lösung in Styrol | 7,8 |
| Monomer, Styrol | 1,5 |
| organisches Peroxid, tert.-Butylperbenzoat | 0,38 |
| Inhibitor, p-Benzochinon | 0,02 |
| Trennmittel, Zinkstearat | 1,7 |
| Farbpaste, Lithopone | 0,4 |
| Füllstoff, ATH fein | 20,9 |
| Füllstoff, ATH grob | 30 |
| Dekor-Partikel, auf Basis von SMC/BMC-Recyclat, > 600 µm Farbe: schwarz | 1,2 |
| Dekor-Partikel, auf Basis von mineralischem Gestein mittlerer Teilchendurchmesser: 1 000 µm Farbe: blaugrün | 5,5 |
| Dekor-Partikel, auf Basis von mineralischem Gestein mittlerer Teilchendurchmesser: 1 000 µm Farbe: rot | 0,8 |
| E-Glasfasern, 12 mm Faserlänge | 18,0 |

Dekor-Compound kann entweder als SMC oder als BMC hergestellt werden. Für die Halbzeugform SMC stehen zur Herstellung von Dekor-Compound zwei Verfahrensvarianten zur Verfügung:
a) über den Rakelspaltprozeß
b) über den Rakelspaltprozeß in Verbindung mit einem Ausstreuverfahren

Rakelspaltprozeß bedeutet, daß alle Rezepturkomponenten mit Ausnahme der Glasfasern und des Eindickungsmittels in einem Rührbottich mit einem Rührsystem (z. B. Dissolver) zu einer mehr oder weniger viskosen Harzpaste homogenisiert werden. Kurz vor der im folgenden beschriebenen Einarbeitung der Verstärkungsfasern wird das Eindickmittel zur Harzpaste gegeben. Die Harzpaste mit dem Eindickmittel wird über ein Rakelsystem in definierter Menge auf eine Trägerfolie aufgerakelt. Auf diesen Harzpastenfilm werden die Verstärkungsfasern (Glasfasern) in definierter Menge aufgebracht. Mit Hilfe von Breitschneidwerken werden Glasfaserrovings auf eine bestimmte Faserlänge geschnitten und der gewünschte Fasermengenanteil auf den Harzpastenfilm dosiert. Auf diese Faserschicht wird ein zweiter Harzpastenfilm über eine zweite Trägerfolie aufgebracht, so daß eine Art Sandwich entsteht mit Verstärkungsfasern in der Mitte, welche von der Harzpaste durchtränkt (imprägniert) werden. Dieses flächige Produkt wird zu Rollen aufgewickelt. Das so hergestellte SMC kann nach einigen Tagen Reifezeit im Heißpreßverfahren verarbeitet werden.

Die SMC-Herstellung nach dem Rakelspaltprozeß ist auf Dekor-Partikel mit einer Korngröße < 500 µm beschränkt. Gröbere Partikel sind aufgrund der geringen Rakelspalte nicht rakelbar.

Die Einarbeitung gröberer Partikel erfolgt mit dem Aufstreuverfahren, wobei mit Hilfe einer Streuanlage die Partikel entweder auf den Harzpastenfilm oder zwischen die Glasfasern gestreut werden.

Für die Halbzeugform BMC wird in Knetern oder Turbulenzmischern gearbeitet. Dabei wird folgendermaßen vorgegangen:

Alle Rezepturkomponenten, mit Ausnahme von Dekor-Partikeln, ca. 50 % des Füllstoffes und den Glasfasern, werden in einem Rührbottich mit einem Rührsystem (z.B. Dissolver) zu einer mehr oder weniger viskosen Harzpaste homogenisiert.

Die so hergestellte Harzpaste wird komplett in das Mischsystem (z.B. Doppel-Z-Kneter oder Schnellmischer) dosiert.

Der noch ausstehende Füllstoffanteil wird zur Harzpaste in den Mischer dosiert und bis zur homogenen Harzpaste gemischt. Im nächsten Schritt werden die Dekor-Partikel in den Mischer dosiert und bis zur homogenen Verteilung in der Harzpaste gemischt.

In der letzten Stufe werden die geschnittenen Glasfasern zudosiert und über eine oder mehrere Knetstufen bzw. Mischgeschwindigkeiten homogen in der Harzpaste verteilt. Im Falle von Dekor-Compound ist es zwingend erforderlich die Faserhomogenisierung auf ein Minimum an Mischzeit bzw. Minimum an Energieeintrag zu beschränken, um
a) bedingt durch auftretende Reibungskräfte zwischen Glasfasern, Dekor-Partikeln und Füllstoffen eine Schädigung der Glasfasern zu unterbinden bzw. zu minimieren;
b) einen Farbabrieb der Dekor-Partikel zu vermeiden bzw. zu minimieren.

Die Anwendungen für Dekor-Compound sind zum Beispiel Gartentische, Spülen, Büroartikel, Elektrobauteile, Fassadenplatten, Sanitärteile etc.

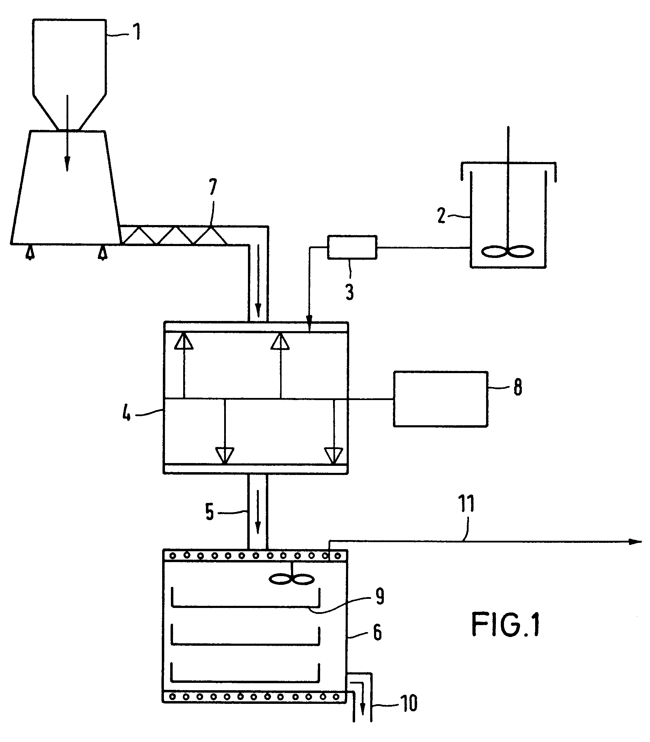

In Fig. 1 ist schematisch das Herstellungsverfahren von Dekor-Partikeln gezeigt. In einem Behälter 2 wird das Färbungsmittel aufbereitet und bei laufendem Mischer 4 über eine Dosiervorrichtung 3 in den Mischer 4 gefördert. Zugleich werden Rohpartikel von einem Sammelbehälter 1 über gravimetrische Dosierung und einem Schneckengewinde 7 in den Mischer 4 eingebracht. Im Mischer 4 erfolgt eine Homogenisierung von Partikeln und Färbungsmitteln. Angetrieben ist der Mischer 4 durch einen Motor 8. Anschließend erfolgt ein Abfüllen 5 der gefärbten Dekor-Partikel auf Trocknungsböden 9 eines Ofens 6. In diesem Ofen 6 werden die Dekor-Partikel getrocknet und gehärtet. Über einen Auslaß 10 verlassen die gefärbten und getrockneten Dekor-Partikel den Ofen 6. Über eine Leitung 11 wird die entstehende Abluft entsorgt.

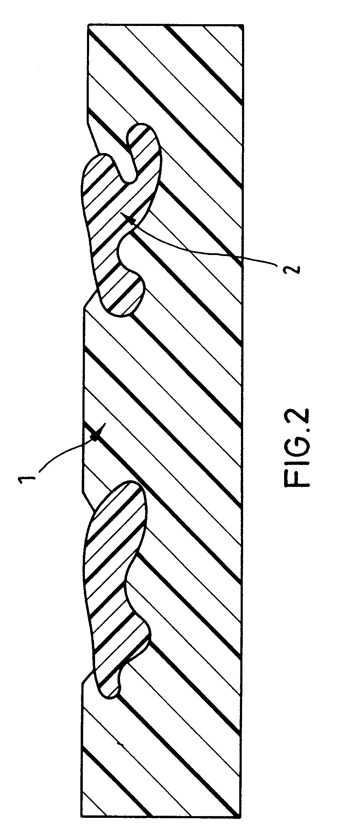

Fig. 2 zeigt im Schnitt das fertige Dekor-Compound-Formteil. In einer eingefärbten Matrix 1 befinden sich Dekor-Partikel 2, die die interessante Oberfläche des Compounds bilden.

## Patentansprüche

1. Verfahren zur Herstellung von Dekor-Partikeln für den Einsatz in glasfaserverstärkten Duroplasten mit folgenden Verfahrensschritten:
- Vorbereitung des Färbungsmittels,
- Gravimetrische Dosierung der Dekor-Partikel in einen Mischer,
- Zugabe des aufbereiteten Färbungsmittels zu den Dekor-Partikeln im Mischer
- Mischung bis zur homogenen Verteilung des Farbstoffes auf den Dekor-Partikeln,
- Verteilen der gefärbten Dekor-Partikel auf Trockenböden,
- Trocknung und Härtung der gefärbten Dekor-Partikel in einem Trockenofen.

2. Verfahren nach Anspruch 1, **dadurch gekennzeichnet**, daß als Dekor-Partikel anorganische (mineralische) Gesteine mit einer Korngeometrie und einer Korngröße größer 100 µm und kleiner 3 000 µm oder mit Plättchenstruktur und einer durchschnittlichen Plättchenlänge größer 500 µm und kleiner 20 000 µm verwendet werden.

3. Verfahren nach Anspruch 1, **dadurch gekennzeichnet**, daß als Dekor-Partikel SMC/BMC-Recyclat, d.h. gemahlene Teile aus gehärteten ungesättigten Polyesterformmassen verwendet wird.

4. Verfahren nach Anspruch 1, **dadurch gekennzeichnet**, daß als Dekor-Partikel organische Partikel (auch Naturprodukte) wie z.B. Kirschkerne, Nußschalen oder Holzspäne verwendet werden.

5. Verfahren nach einem der Ansprüche 1 bis 4, **dadurch gekennzeichnet**, daß film- bzw. beschichtungsfähige Lacke als Färbungsmittel verwendet werden.

6. Verfahren nach Anspruch 5, **dadurch gekennzeichnet**, daß Lacksysteme auf Wasserbasis verwendet werden.

7. Verfahren nach einem der Ansprüche 1 bis 6, **dadurch gekennzeichnet**, daß die Trockenzeit je nach Lacksystem zwischen 1 Minute und 6 Stunden bei Temperaturen von Raumtemperatur bis 200°C beträgt.

8. Verfahren nach einem der Ansprüche 1 bis 7, **dadurch gekennzeichnet**, daß als Trockenofen ein Umluftofen oder ein Infrarot-Tunnelofen verwendet wird.

9. Verwendung von eingefärbten Dekor-Partikeln, insbesondere hergestellt nach dem Verfahren einer der Ansprüche 1 bis 8, zur Herstellung von glasfaserverstärkten Duroplasten.

10. Glasfaserverstärkte Duroplaste mit im wesentlichen folgenden Bestandteilen:
- Eingefärbte Dekor-Partikel, hergestellt insbesondere nach dem Verfahren einer der Ansprüche 1 bis 8,
- Polymerharz,
- Thermoplastharz,
- Vernetzungsinitiatoren
- Inhibitoren,
- Interne Trennmittel,
- Ungesättigte Monomere,
- Anorganische und organische Farbpigmente,
- Füllstoffe
- Eindickmittel und
- Glasfasern.

11. Verwendung von glasfaserverstärkten Duroplasten mit darin enthaltenden eingefärbten Dekor-Parktikeln für Gartentische, Spülen, Büroartikel, Elektrobauteile, Fassadenplatten oder Sanitärteile.
